Europäisches Patentamt

(19) European Patent Office

Office européen des brevets

(11) Publication number : **0 377 283 B1**

(12) **EUROPEAN PATENT SPECIFICATION**

(45) Date of publication of patent specification :
10.02.93 Bulletin 93/06

(51) Int. Cl.⁵ : **C09D 17/00, D21H 19/38**

(21) Application number : **89312401.6**

(22) Date of filing : **29.11.89**

(54) **Paper coating pigments.**

(30) Priority : **16.12.88 GB 8829388**

(43) Date of publication of application :
**11.07.90 Bulletin 90/28**

(45) Publication of the grant of the patent :
**10.02.93 Bulletin 93/06**

(84) Designated Contracting States :
**AT BE CH DE ES FR GR IT LI LU NL SE**

(56) References cited :
**EP-A- 0 108 842**
**EP-A- 0 260 945**
**US-A- 3 790 396**
**US-A- 4 772 332**

(73) Proprietor : **ECC INTERNATIONAL LIMITED**
**1015 Arlington Business Park**
**Theale, Reading, Berkshire RG7 4SA (GB)**

(72) Inventor : **Beazley, Kenneth Michael**
**44 Brockstone Road**
**Boscoppa St. Austell Cornwall (GB)**

(74) Representative : **Bull, Michael Alan et al**
**Haseltine Lake & Co. Hazlitt House 28**
**Southampton Buildings Chancery Lane**
**London WC2A 1AT (GB)**

EP 0 377 283 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to paper coating compositions containing two or more pigments, one of which when suspended in water releases into solution cations having a valency of two or more.

The cations most likely to be released into aqueous solution by a paper coating pigment are the $Ca^{2+}$, $Mg^{2+}$ and $Al^{3+}$ ions and certain materials are available which on account of their whiteness and low solubility in water are suitable for consideration as paper coating pigments, but which are nevertheless sufficiently soluble to release cations of the above type into solution.

One example of such a material is calcium sulphate which is available both as a naturally occurring mineral and as an industrial product or by-product. Calcium sulphate exists as a dihydrate, $CaSO_4.2H_2O$, as a hemihydrate, $CaSO_4.0.5H_2O$, and in a completely anhydrous form. It possesses many properties which would make it suitable for use as a paper coating pigment, but it is slightly soluble in water, the solubility of the dihydrate being, for example 2.5g/l at 20°C, and therefore releases calcium ions into solution.

A paper coating composition must generally contain just sufficient water to render the composition fluid because it is uneconomic to evaporate large quantities of water from the coated paper. Generally the composition must contain at least 50%, and preferably at least 60%, by weight of dry pigment and the pigment must be deflocculated if the composition is to be sufficiently fluid for handling in the paper coating system. The pigment must also be of fine particle size if acceptable optical and surface smoothness properties are to be obtained in the coated paper. Raw calcium sulphate is generally not available with a sufficiently fine particle size distribution and must be comminuted in one of three basic ways:-

(i) The raw calcium sulphate may be wet ground in a high solids content deflocculated aqueous suspension containing at least 50%, and preferably at least 60%, on a dry weight basis of calcium sulphate. A suitable deflocculant for this purpose is sodium carboxymethyl cellulose (CMC) but the amount required to maintain calcium sulphate in a deflocculated state when sufficiently finely ground for paper coating pigment purposes renders this commercially unattractive;

(ii) The raw calcium sulphate may be wet ground in a low solids content, i.e. less than 50% by weight, aqueous suspension and in the absence of a dispersing agent, and the suspension of fine calcium sulphate then dewatered to increase the solids content to the desired level and treated with a dispersing agent to increase the fluidity of the suspension. If the low solids content suspension is dewatered by thermal drying the fine calcium sulphate tends to form aggregates which are very difficult to break up on redispersion of the pigment. If, on the other hand, the suspension is dewatered by high pressure filtration according to the process described in our British Patent Specification No. 2200103 major expenditure on processing plant is entailed. Also calcium sulphate ground in a low solids content suspension tends to have a narrower particle size distribution and to be deficient in those fine particles which are most desirable in a paper coating pigment; or

(iii) the raw calcium sulphate may be dry ground with or without subsequent particle size classification and the fine product dispersed in water containing a dispersing agent to form a high solids content suspension. However, this process, for a given expenditure of grinding energy, gives a less fine product than wet grinding and the product will also be deficient in very fine particles.

It is common practice to use calcium sulphate in a paper coating composition, not as the sole pigment, but in combination with one or more other pigments such as kaolin, talc or calcium carbonate. This is generally accomplished by forming a high solids deflocculated calcium sulphate suspension by one of the methods outlined above, by preparing a high solids deflocculated suspension of the second pigment and by blending the two suspensions in the desired proportions. The blending of the two suspensions is generally accompanied, however, by a massive thickening of the blended suspension which is known as "shock", and although this effect can be minimised by careful blending techniques and by the use of certain special dispersing agents or other additives as described in our British Specifications Nos. 2179954 and 2200900, the phenomenon remains an obstacle to the use of calcium sulphate as a paper coating pigment. The phenomenon of shock is believed to be caused by the calcium ions released into solution by the calcium sulphate reacting with the dispersing agent used for the second pigment, thus causing the pigments to flocculate.

General information regarding the nature and methods of preparation of paper coating compositions may be found in an article entitled "An operator's guide to aqueous coating for paper and board", Section 9 : Formulating and preparing the coating mix. Ed. J.M. Chamberlain; Paper Industry Technical Association (formerly part of British Patent and Board Industry Federation), London, 1982.

An object of this invention is to prepare a suspension comprising calcium sulphate and at least one other pigment which suspension has a solids content of at least 50%, and preferably at least 60%, on a dry weight basis of mixed pigments and a viscosity appropriate for a paper coating composition, for example not greater than 3000 mPa.s as measured by a Brookfield Viscometer at 100 r.p.m. and at 22°C. The suspension of the mixed pigments is prepared in such a way that the disadvantageous effects of the phenomenon of shock are substantially avoided.

According to the present invention, there is provided a process for preparing an aqueous suspension containing at least 50% by weight of a mixed pigment comprising a first pigment which releases into aqueous solution cations of valency greater than 1 and a second pigment, which process comprises:

(a) forming first and second aqueous suspensions of each of the first and second pigments respectively, each of the first and second aqueous suspensions containing not greater than 50% by weight of the first and second pigments respectively;

(b) combining the first and second suspensions to form a flocculated suspension;

(c) mechanically dewatering the flocculated suspension formed in step (b) to form a cake; and

(d) mixing the cake formed in step (c) with water containing a dispersing agent to form a suspension containing at least 50% on a dry weight basis, of the mixed pigments.

According to another aspect of the present invention, there is provided a process for preparing an aqueous paper coating composition containing at least 50% by weight of a mixed pigment comprising a first pigment which releases into aqueous solution cations of valency greater than 1 and a second pigment, which process comprises:

(a) forming first and second aqueous suspensions of each of the first and second pigments respectively, each of the first and second aqueous suspensions containing not greater than 50% by weight of the first and second pigments respectively;

(b) combining the first and second suspensions to form a flocculated suspension;

(c) mechanically dewatering the flocculated suspension formed in step (b) to form a cake;

(d) mixing the cake formed in step (c) with water containing a dispersing agent to form a suspension containing at least 50% on a dry weight basis, of the mixed pigments; and

(e) combining with the suspension formed in step (d) an adhesive to form an aqueous paper coating composition containing at least 50%, on a dry weight basis, of the mixed pigments.

Each of the first and second suspensions may be either deflocculated or flocculated. Preferably, however, the aqueous first suspension will be flocculated and the second suspension deflocculated. Both suspensions could be deflocculated; for example, an aqueous suspension of gypsum at high solids content could be blended with a suspension formed by redispersing substantially dry clay in water at high solids content, and in this case both suspensions would be deflocculated.

In step (b), when the suspensions are blended together, the "shock" phenomenon initiates flocculation.

The cations released by the first pigment are most commonly calcium or magnesium ions and the first pigment may be, for example, calcium sulphate in its dihydrate, hemi-hydrate or anhydrate form. The second pigment may advantageously be kaolin, natural or precipitated calcium carbonate or talc.

If, as is commonly the case, the second pigment is kaolin it is convenient to use in step (a) a deflocculated suspension containing between about 5% and about 25% on a dry weight basis of kaolin since in the conventional wet process for refining kaolin, the raw kaolin suspension after the "grit" or particles larger than about 50 microns has been removed, is deflocculated by means of a dispersing agent and subjected to a particle size separation by gravitational or centripetal sedimentation. The supernatant fraction which contains kaolin with a particle size distribution appropriate for a paper coating pigment generally has a solids content in the range from 5% to 25% by weight. As an alternative, the deflocculated kaolin suspension may be prepared at a solids content greater than 50% by weight and diluted to not more than 50% by weight before use. A deflocculated suspension containing less than 50% by weight of solids could be prepared but it is generally preferred to prepare a suspension containing a higher proportion of solids because more efficient dispersion is obtained under these conditions; if the kaolin disperses just as well in a suspension of the first pigment as it does in water alone, then any incomplete dispersion of the kaolin could be corrected during a subsequent mixing stage. However, if the kaolin disperses less easily in the first pigment suspension then it would be advantageous to prepare the kaolin suspension at high solids content and then dilute.

The deflocculated kaolin suspension is mixed with a suspension containing not more than 50%, on a dry weight basis, of calcium sulphate which may be either flocculated or deflocculated, but which for the purposes of the invention has preferably been prepared by grinding, in the absence of a dispersing agent, either in a dry state or in a suspension containing from 5% to 50% by weight of the dry calcium sulphate. Preferably the calcium sulphate is ground to a particle size distribution such that from 60 to 75% by weight consists of particles having an equivalent spherical diameter smaller than 2 microns.

The mixed suspension, which becomes fully flocculated during the mixing operation, is then dewatered to form a cake and the cake is mixed with a dispersing agent which is generally dissolved in a small quantity of water to form a deflocculated suspension containing at least 50%, and preferably at least 60% on a dry weight basis of the mixed pigments. The dispersing agent is conveniently the same as was used in the preparation of the deflocculated kaolin suspension but a different dispersing agent may be used if desired.

The dispersing agent used for the kaolin may be an alkali metal or ammonium salt of a poly(phosphoric acid), poly(acrylic acid), poly(methacrylic acid), a copolymer of acrylic acid or methacrylic acid with 2-acrylamido-2-methyl propane sulphonic acid (AMPS) or a copolymer of maleic acid or maleic anhydride with vinyl acetate. The amount of the dispersing agent required is generally in the range of from 0.01 to 0.5% by weight based on the weight of dry kaolin.

The dispersing agent for the mixed pigments may also be chosen from the group given above and the amount of the dispersing agent required is in the range from 0.01 to 0.5% by weight based on the weight of the dry mixed pigments.

Preferably there is also added to the suspension of the mixed pigments sufficient of an alkali to raise the pH to at least 9. It may also be advantageous to add to the filter cake of mixed pigments (or to the suspension of mixed pigments) from 0.1 to 1.5% by weight, based on the weight of the dry mixed pigments, of an anionic wetting agent which may, for example, be calcium dodecyl benzene sulphate. When a wetting agent is used it is sometimes necessary to add also from 0.05 to 0.2% by weight, based on the weight of dry mixed pigments of a defoamer.

The suspension of the mixed pigments may contain from 1% by weight of the first pigment and 99% by weight of the second pigment to 75% by weight of the first pigment and 25% by weight of the second pigment.

The adhesive will normally be an aqueous suspension of adhesive solids. The adhesive solids employed in making up the paper coating composition will be chosen to suit the particular requirements of the coating which is to be applied and the printing process to be used. By way of example, the adhesive solids may be a starch, a water dispersible synthetic resin or latex such as a styrene butadiene copolymer, a polyvinyl alcohol, acrylic polymers, polyvinyl acetate, butadiene-acrylonitrile copolymers; cellulose derivatives such as methyl cellulose, sodium carboxymethyl cellulose or hydroxyethyl cellulose; proteinaceous materials such as casein, animal glue and vegetable proteins. The amount of adhesive solids employed will depend upon the actual adhesive being used; however, by way of example, the composition will generally contain from 10 to 35% by weight, based on the weight of the dry mixed pigments, of adhesive solids. A discussion of the constituents of paper coating compositions and of the methods of applying such compositions to paper is given in Chapter XIX, Volume III, of the 2nd Edition of the book by James P. Casey entitled "Pulp and Paper : Chemistry and Technology", pages 1646 to 1651.

The invention will now be illustrated by the following Examples.

EXAMPLES

EXAMPLE 1 (COMPARATIVE)

To demonstrate the general appearance of shock when calcium sulphate suspensions are blended with suspensions of other pigments, calcium sulphate dihydrate which was a by-product of a process for preparing citric acid was mixed with water not containing a dispersing agent to form a suspension containing 30% by weight of dry solids. The calcium sulphate was ground by agitating the suspension with Leighton Buzzard sand having grain sizes between No. 16 mesh B.S. sieve (nominal aperture 1.0mm) and No. 30 mesh B.S. sieve (nominal aperture 0.5mm) to give a calcium sulphate product having a particle size distribution such that 90% by weight consisted of particles having an equivalent spherical diameter smaller than 2 microns. The suspension of ground calcium sulphate was dewatered by filtration at a pressure of 1500 psig (10.03 MPa) to give a cake containing about 80% by weight of solids. The cake was redispersed in a small amount of additional water in a laboratory high speed mixer using as the dispersing agent 2.5% by weight, based on the weight of calcium sulphate dihydrate, of a low viscosity sodium carboxymethyl cellulose (CMC). The resultant suspension had a solids content of 59.2% by weight and a viscosity as measured with a Brookfield Viscometer using Spindle No. 4 at a speed of 100 r.p.m. of 1410 mPa.s.

The following deflocculated aqueous suspensions of second pigments were prepared:-

A. A suspension containing 67.0% by weight of a primary kaolin clay having a particle size distribution such that 80% by weight consisted of particles having an equivalent spherical diameter smaller than 2 microns and 0.3% by weight, based on the weight of dry kaolin, of a dispersing agent which was the sodium salt of a copolymer having 8% by weight of the monomer unit AMPS and 92% by weight of the monomer unit acrylic acid and 0.1% by weight, based on the weight of dry kaolin, of sodium hydroxide.

B. A suspension containing 74.5% by weight of a secondary kaolin having a particle size distribution such that 97% by weight consisted of particles having an equivalent spherical diameter smaller than 2 microns and the same dispersing reagents (i.e. the copolymeric dispersing agent and sodium hydroxide) in the same amounts as in Suspension A.

C. A suspension containing 72.7% by weight of ground natural marble having a particle size distribution such that 95% by weight consisted of particles having an equivalent spherical diameter smaller than 2 microns and 0.6% by weight, based on the weight of dry marble, of a sodium polyacrylate dispersing agent having a weight average molecular weight of 4600.

D. A suspension containing 62.6% by weight of ground talc having a particle size distribution such that 35% by weight consisted of particles having an equivalent spherical diameter smaller than 2 microns and 0.3% by weight, based on the weight of dry talc, of sodium hexametaphosphate and 1% by weight, based on the weight of dry talc, of a non-ionic wetting agent based on polyethylene glycol.

Each suspension A to D above was charged in turn into a laboratory high speed mixer which was set in motion. The viscosity of each suspension was measured with a Brookfield Viscometer using Spindle No. 3 at 100 r.p.m.. To each suspension there was added sufficient of the deflocculated calcium sulphate suspension to provide 5% by weight of calcium sulphate dihydrate based on the weight of dry second pigment. The effect of mixing the two suspensions was observed and the results are set forth in Table 1 which is at the end of this description.

The results tabulated in Table 1 below show that a deflocculated suspension of calcium sulphate can produce shock when blended with fluid, deflocculated suspensions of any of the above named pigments.

It is expected that the use of a flocculated suspension of calcium sulphate would produce an even more intense thickening effect when blended with a fluid, deflocculated suspension of a second pigment since a flocculated suspension would allow unhindered release of calcium ions into solution and these cations would then be available to have a flocculating effect on the fluid, deflocculated suspension of the second pigment. In a deflocculated suspension, the deflocculant would tend to react with or sequester calcium ions released into solution.

### EXAMPLE 2 (COMPARATIVE)

The same raw calcium sulphate dihydrate as was used in Example 1 was dry ground to give a product having a particle size distribution such that 30% by weight consisted of particles having an equivalent spherical diameter smaller than 2 microns. The ground calcium sulphate was then mixed with water containing 0.7% by weight, based on the weight of calcium sulphate dihydrate, of low viscosity CMC as the dispersing agent in a high speed laboratory mixer to form a suspension containing 69.4% by weight of calcium sulphate dihydrate. The viscosity of the suspension as measured with a Brookfield Viscometer using Spindle No. 3 at 100 r.p.m. was 195 mPa.s. This suspension was mixed with Suspension A of Example 1 in the high speed mixer in proportions such as to provide 5% by weight of calcium sulphate dihydrate based on the weight of dry kaolin. The solids content of Suspension A was initially 67.0% by weight and the viscosity as measured with the Brookfield Viscometer at 100 r.p.m. was 740 mPa.s, but on adding the calcium sulphate suspension a thick paste was formed with a viscosity too high to measure. This Example demonstrates that a suspension of relatively coarse calcium sulphate will cause shock when added to a kaolin suspension just as readily as a suspension of relatively fine calcium sulphate.

### EXAMPLE 3 (INVENTION)

A sample of a flocculated suspension of fine calcium sulphate dihydrate was prepared by grinding the same raw material as used in Example 1, in the same manner as described in Example 1, and diluting the suspension of ground calcium sulphate with water to reduce the solids content to 15% by weight.

A sample of a deflocculated suspension of the same calcium sulphate was also prepared by grinding and dewatering the raw material as described in Example 1 and redispersing the filter cake with 2.5% by weight, based on the weight of calcium sulphate dihydrate, of CMC and sufficient water to give a solids content of 15% by weight.

Each of Suspensions A to D described in Example 1 was diluted to a solids content of 15% by weight and charged in turn into the laboratory high speed mixer which was set in motion. To each suspension there was then rapidly added sufficient of the flocculated suspension of calcium sulphate dihydrate to provide a suspension of a mixed pigment consisting of 50% by weight of calcium sulphate dihydrate and 50% by weight of the dry second pigment.

A further mixed suspension was prepared by mixing together in the manner described above Suspension A and the deflocculated suspension of calcium sulphate in the proportions 50% by weight of calcium sulphate dihydrate and 50% by weight of dry kaolin.

All five of the mixed suspensions wer dewatered by filtration at a pressure of 150psig (1.03MPa) and in each case the filter cake was redispersed using as the dispersing agent 0.5% by weight, based on the weight of dry solids, of the same dispersing agent as was used in preparing suspensions A and B and sufficient sodium hydroxide to raise the pH to at least 9. In order to minimise the quantity of water added, the dispersing reagents were first mixed with the filter cake and the resultant liquified mass then transferred to the high speed mixer to complete the mixing.

A second series of five mixed pigments was prepared by the method described above except that there was mixed with the filter cake in each case, in addition to the dispersing agent used in Suspension A and B and the sodium hydroxide, a quantity of the anionic wetting agent calcium dodecyl benzene sulphate and 0.1 to 0.2% by weight, based on the weight of dry solids, of a defoamer based on a polyether derivative of a fatty acid.

In each case the percentage by weight of dry solids in the suspension, the pH of the suspension, the viscosity as measured with the Brookfield Viscometer using Spindles Nos. 3 - 6 (depending upon the viscosity) at 100 r.p.m. were determined and the results are set forth in Table II reproduced at the end of this description. Table II below also shows the quantity of calcium dodecyl benzene sulphate added in terms of the percentage by weight of active wetting agent based on the weight of dry mixed pigments.

The results tabulated in Table II show that although the rheological properties of all the suspensions are improved in comparison with those records in Table I, the suspensions containing primary kaolin (Suspension A) are still not sufficiently fluid for preparing paper coating compositions. The viscosity of the suspensions containing secondary kaolin (Suspension B) is almost acceptable, especially when calcium dodecyl benzene sulphate is used, and the suspensions containing marble and talc (Suspension C and D) have an advantageously low viscosity which is reduced still further when calcium dodecyl benzene sulphate is added.

## EXAMPLE 4 (INVENTION)

A sample of a flocculated suspension of coarse calcium sulphate dihydrate was prepared by grinding the same raw material as used in Example 1, in the manner described in Example 2, and mixing the ground product in the high speed mixer with sufficient water to give a solids content of 15% by weight.

A sample of Suspension A, as described in Example 1, was diluted to a solids content of 15% by weight and charged to the high speed mixer. There was then added sufficient of the flocculated calcium sulphate suspension to provide a suspension of a mixed pigment consisting of 50% by weight of calcium sulphate dihydrate and 50% by weight of dry kaolin. This mixed pigment suspension was dewatered and redispersed in water as described in Example 3.

A sample of a deflocculated suspension of the same coarse calcium sulphate dihydrate was prepared by grinding the raw material as in Example 2, and mixing the ground product with a relatively small amount of water and 0.7% by weight of CMC, based on the weight of calcium sulphate dihydrate to form a high solids suspension which was then diluted with water to 15% by weight of solids.

A sample of Suspension B, as described in Example 1, was diluted to a solids content of 15% by weight and charged to the high speed mixer. There was then added sufficient of the deflocculated calcium sulphate suspension to provide a suspension of a mixed pigment consisting of 50% by weight of calcium sulphate dihydrate and 50% by weight of kaolin. The mixed pigment was dewatered and redispersed in water as described in Example 3.

In each case the percentage by weight of dry solids in the suspension, the pH of the suspension, the viscosity as measured with the Brookfield Viscometer using Spindles Nos. 3 - 6 (depending upon the viscosity) at 100 r.p.m. were determined, and the results are set forth in Table III reproduced at the end of this description. Table III also shows the quantity of calcium dodecyl benzene sulphate added in terms of the percentage by weight of active wetting agent based on the weight of dry mixed pigments.

These results show that the use of the anionic wetting agent is detrimental when the calcium sulphate is relatively coarse but suspensions of acceptable viscosity are obtained both with and without the wetting agent when the kaolin is of the fine secondary type (Suspension B).

Mixed pigment suspensions containing the coarser calcium sulphate are more fluid than the suspensions containing the fine calcium sulphate, but it is desirable to use pigments of fine particle size paper coating composition if good gloss and smoothness properties in the coated paper are to be achieved. In order to combine good rheological properties with good gloss and smoothness it would appear to be advantageous to grind the calcium sulphate to a particle size distribution such that from 60% to 75% by weight consists of particles having an equivalent spherical diameter smaller than 2 microns.

TABLE I

| Suspension of Second Pigment | % by wt. of dry solids | Viscosity (mPa.s) | Effect of adding Calcium Sulphate Suspension |
|---|---|---|---|
| A | 67.0 | 740 | Thick paste, viscosity > 10,000 mPa.s |
| B | 74.5 | 560 | Solidified |
| C | 72.7 | 360 | Thick paste, viscosity > 10,000 mPa.s |
| D | 62.6 | 75 | Thick paste, viscosity > 10,000 mPa.s |

TABLE II

| Suspension of Second Pigment | Calcium Sulphate Suspension | % by weight of Calcium Dodecyl Benzene Sulphate | pH | % by wt. of solids | Viscosity (mPa.s) |
|---|---|---|---|---|---|
| A | flocculated | 0 | 10.5 | 63.9 | 6,660 |
| A | flocculated | 0.7 | 10.0 | 64.3 | >10,000 |
| B | flocculated | 0 | 10.8 | 64.3 | 4,250 |
| B | flocculated | 0.7 | 9.0 | 64.1 | 1,350 |
| C | flocculated | 0 | 10.2 | 62.9 | 830 |
| C | flocculated | 0.7 | 10.6 | 62.5 | 280 |
| D | flocculated | 0 | 9.7 | 63.4 | 690 |
| D | flocculated | 1.0 | 9.3 | 64.8 | 480 |
| A | deflocculated | 0 | 10.0 | 66.9 | 8,100 |
| A | deflocculated | 0.7 | 9.3 | 66.3 | 7,550 |

EP 0 377 283 B1

TABLE III

| Suspension of second pigment | Calcium sulphate suspension | % by weight of calcium dodecyl benzene sulphate | pH | % by weight of solids | Viscosity (mPa.s) |
|---|---|---|---|---|---|
| A | Flocculated | 0 | 9.8 | 70.3 | 3,120 |
| A | Flocculated | 0.7 | 9.7 | 70.7 | 8,900 |
| B | Deflocculated | 0 | 9.0 | 70.7 | 235 |
| B | Deflocculated | 0.7 | 9.7 | 70.5 | 460 |

**Claims**

1. A process for preparing an aqueous suspension containing at least 50% by weight of a mixed pigment comprising a first pigment which releases into aqueous solution cations of valency greater than 1 and a second pigment, which process comprises:
   (a) forming first and second aqueous suspensions of each of the first and second pigments respectively, each of the first and second aqueous suspensions containing not greater than 50% by weight of the first and second pigments respectively;
   (b) combining the first and second suspensions to form a flocculated suspension;
   (c) mechanically dewatering the flocculated suspension formed in step (b) to form a cake; and
   (d) mixing the cake formed in step (c) with water containing a dispersing agent to form a suspension containing at least 50% on a dry weight basis, of the mixed pigments.

2. A process according to claim 1, wherein the first pigment is one which releases into aqueous solution calcium or magnesium cations.

3. A process according to claim 2, wherein the first pigment is calcium sulphate.

4. A process according to any one of claims 1 to 3, wherein the second pigment is chosen from kaolin, natural or precipitated calcium carbonate or talc.

5. A process according to any one of claims 1 to 4, wherein the second aqueous suspension formed in step (a) is a deflocculated suspension.

6. A process according to any one of claims 1 to 5, wherein the first pigment has a particle size distribution such that from 60 to 75% by weight consists of articles having an equivalent spherical diameter smaller than 2microns.

7. A process according to any one of the preceding claims, wherein there is added to the mixed suspension formed in step (b) sufficient of an alkali to raise the pH to at least 9.

8. A process according to any one of the preceding claims, wherein there is added to the mixed pigments an anionic wetting agent.

9. A process according to claim 8, wherein the anionic wetting agent is added in an amount of from 0.1 to 1.5% by weight, based on the weight of the dry mixed pigments.

10. A process according to claim 8 or 9, wherein the anionic wetting agent is calcium dodecyl benzene sulphate.

11. A process according to any one of claims 8 to 10, wherein there is further added, to the aqueous suspen-

8

sion of mixed pigments formed in step (b), a defoamer in an amount of from 0.05 to 0.2% by weight, based on the weight of the dry mixed pigments.

12. A process according to any one of the preceding claims, wherein the first and second pigments are employed in amounts such as to provide, in the mixed suspension of pigments formed in step (b), from 1% by weight of the first pigment and 99% by weight of the second pigment to 75% by weight of the first pigment and 25% by weight of the second pigment.

13. A process according to any one of the preceding claims, wherein the aqueous suspension of first pigment employed in step (a) is in a flocculated state.

14. A process for preparing an aqueous paper coating composition containing at least 50% by weight of a mixed pigment comprising a first pigment which releases into aqueous solution cations of valency greater than 1 and a second pigment, which process comprises:
    (a) forming first and second aqueous suspensions of each of the first and second pigments respectively, each of the first and second aqueous suspensions containing not greater than 50% by weight of the first and second pigments respectively;
    (b) combining the first and second suspensions to form a flocculated suspension;
    (c) mechanically dewatering the flocculated suspension formed in step (b) to form a cake;
    (d) mixing the cake formed in step (c) with water containing a dispersing agent to form a suspension containing at least 50% on a dry weight basis, of the mixed pigments; and
    (e) combining with the suspension formed in step (d) an adhesive to form an aqueous paper coating composition containing at least 50%, on a dry weight basis, of the mixed pigments.

**Patentansprüche**

1. Verfahren zum Herstellen einer zumindest 50 Gew.-% eines Pigmentgemisches enthaltenden wässerigen Suspension, wobei das Pigmentgemisch ein in wässerige Lösung Kationen mit einer Wertigkeit von mehr als 1 abgebendes erstes Pigment und ein zweites Pigment enthält, bei welchem Verfahren
    (a) eine erste wässerige Suspension und eine zweite wässerige Suspension aus jeweils dem ersten Pigment bzw. dem zweiten Pigment hergestellt wird, wobei sowohl die erste wässerige Suspension als auch die zweite wässerige Suspension nicht mehr als 50 Gew.-% des ersten Pigments bzw. des zweiten Pigments enthält,
    (b) die erste Suspension und die zweite Suspension zu einer geflockten Suspension kombiniert werden,
    (c) die in Stufe (b) hergestellte geflockte Suspension mechanisch unter Ausbildung eines Kuchens entwässert wird und
    (d) der in Stufe (c) hergestellte Kuchen mit ein Dispergiermittel enthaltendem Wasser unter Ausbildung einer Suspension vermischt wird, welche, als Trockenstoff gerechnet, zumindest 50 Gew.-% des Pigmentgemisches enthält.

2. Verfahren nach Anspruch 1, worin das erste Pigment ein Pigment ist, welches in wässerige Lösung Calcium- oder Magnesiumkationen abgibt.

3. Verfahren nach Anspruch 2, worin das erste Pigment Calciumsulfat ist.

4. Verfahren nach irgendeinem der Ansprüche 1 bis 3, worin das zweite Pigment aus Kaolin, natürlichem oder gefälltem Calciumcarbonat oder Talk ausgewählt ist.

5. Verfahren nach irgendeinem der Ansprüche 1 bis 4, worin die in Stufe (a) gebildete zweite wässerige Suspension eine entflockte Suspension ist.

6. Verfahren nach irgendeinem der Ansprüche 1 bis 5, worin das erste Pigment eine solche Teilchengrößenverteilung besitzt, daß 60 bis 75 Gew.-% der Teilchen einen äquivalenten Kugeldurchmesser von weniger als 2 μm aufweisen.

7. Verfahren nach irgendeinem der vorhergehenden Ansprüche, worin dem in Stufe (b) hergestellten Suspensionsgemisch eine zum Anheben des pH-Wertes auf zumindest 9 ausreichende Menge eines Alkalis zugesetzt wird.

8. Verfahren nach irgendeinem der vorhergehenden Ansprüche, worin dem Pigmentgemisch ein anionisches Netzmittel zugesetzt wird.

9. Verfahren nach Anspruch 8, worin das anionische Netzmittel in einer Menge von 0,1 bis 1,5 Gew.-% des trockenen Pigmentgemisches zugesetzt wird.

10. Verfahren nach Anspruch 8 oder 9, worin das anionische Netzmittel Calcium-dodecylbenzolsulfat ist.

11. Verfahren nach irgendeinem der Ansprüche 8 bis 10, worin der in Stufe (b) gebildeten wässerigen Suspension eines Pigmentgemisches ein Schaumzerstörer in einer Menge von 0,05 bis 0,2 Gew.-% des trockenen Pigmentgemisches zugesetzt wird.

12. Verfahren nach irgendeinem der vorhergehenden Ansprüche, worin das erste Pigment und das zweite Pigment in solchen Mengen eingesetzt werden, daß in der in Stufe (b) gebildeten Mischsuspension von Pigmenten 1 Gew.-% des ersten Pigments und 99 Gew.-% des zweiten Pigments bis 75 Gew.-% des ersten Pigments und 25 Gew.-% des zweiten Pigments vorliegen.

13. Verfahren nach irgendeinem der vorhergehenden Ansprüche, worin die in Stufe (a) verwendete wässerige Suspension des ersten Pigments sich im entflockten Zustand befindet.

14. Verfahren zum Herstellen einer zumindest 50 Gew.-% eines Pigmentgemisches enthaltenden wässerigen Papierbeschichtungsmischung, wobei das Pigmentgemisch ein in wässerige Lösung Kationen mit einer Wertigkeit von mehr als 1 abgebendes erstes Pigment und ein zweites Pigment enthält, bei welchem Verfahren

(a) eine erste wässerige Suspension und eine zweite wässerige Suspension aus jeweils dem ersten Pigment bzw. dem zweiten Pigment hergestellt wird, wobei sowohl die erste wässerige Suspension als auch die zweite wässerige Suspension nicht mehr als 50 Gew.-% des ersten Pigments bzw. des zweiten Pigments enthält,

(b) die erste Suspension und die zweite Suspension zu einer geflockten Suspension kombiniert werden,

(c) die in Stufe (b) hergestellte geflockte Suspension mechanisch unter Ausbildung eines Kuchens entwässert wird,

(d) der in Stufe (c) hergestellte Kuchen mit ein Dispergiermittel enthaltendem Wasser unter Ausbildung einer Suspension vermischt wird, welche, als Trockenstoff gerechnet, zumindest 50 Gew.-% des Pigmentgemisches enthält, und

(e) die in Stufe (d) hergestellte Suspension mit einem Klebstoff unter Ausbildung einer wässerigen Papierbeschichtungsmischung vereinigt wird, welche, als Trockenstoffe gerechnet, zumindest 50 Gew.-% des Pigmentgemisches enthält.

## Revendications

1. Procédé de préparation d'une suspension aqueuse contenant au moins 50% en poids d'un pigment mélangé comprenant un premier pigment qui libère en solution aqueuse des cations de valence supérieure à 1 et un second pigment, ce procédé comprenant les étapes qui consistent à :

(a) former la première suspension aqueuse et la seconde suspension aqueuse respectivement du premier pigment et du second pigment pour qu'elles ne contiennent chacune pas plus de 50% en poids du premier pigment et du second pigment, respectivement;

(b) combiner la première suspension et la seconde suspension pour former une suspension floculée;

(c) égoutter mécaniquement la suspension floculée formée dans l'étape (b) pour former un gâteau; et

(d) mélanger le gâteau formé dans l'étape (c) avec de l'eau contenant un agent dispersant pour former une suspension contenant au moins 50%, en poids sec, des pigments mélangés.

2. Procédé selon la revendication 1, dans lequel le premier pigment est un pigment qui libère des cations calcium ou magnésium en solution aqueuse.

3. Procédé selon la revendication 2, dans lequel le premier pigment est du sulfate de calcium.

4. Procédé selon l'une quelconque des revendications 1 à 3, dans lequel le second pigment est choisi parmi le kaolin, le carbonate de calcium naturel ou précipité ou le talc.

5. Procédé selon l'une quelconque des revendications 1 à 4, dans lequel la seconde suspension aqueuse formée dans l'étape (a) est une suspension défloculée.

6. Procédé selon l'une quelconque des revendications 1 à 5, dans lequel le premier pigment a une distribution granulométrique telle que de 60 à 75% de son poids soit constitué de particules ayant un diamètre sphérique équivalent inférieur à 2 $\mu$m.

7. Procédé selon l'une quelconque des revendications précédentes, dans lequel on ajoute à la suspension mélangée formée dans l'étape (b) suffisamment d'une base pour élever le pH à au moins 9.

8. Procédé selon l'une quelconque des revendications précédentes, dans lequel on ajoute aux pigments mélangés un agent mouillant anionique.

9. Procédé selon la revendication 8, dans lequel on ajoute l'agent mouillant anionique en une quantité de 0,1 à 1,5% en poids, par rapport au poids sec des pigments mélangés.

10. Procédé selon la revendication 8 ou 9, dans lequel l'agent mouillant anionique est le dodécylbenzènesulfate de calcium.

11. Procédé selon l'une quelconque des revendications 8 à 10, dans lequel on ajoute aussi, à la suspension de pigments mélangés formée dans l'étape (b), un antimousse en une quantité de 0,05 à 0,2% en poids, par rapport au poids sec des pigments mélangés.

12. Procédé selon l'une quelconque des revendications précédentes, dans lequel les premier et second pigments sont employés en quantités permettant d'avoir, dans la suspension mélangée de pigments formée dans l'étape (b), de 1% en poids du premier pigment et 99% en poids du second piquent à 75% en poids du premier pigment et 25% en poids du second pigment.

13. Procédé selon l'une quelconque des revendications précédentes, dans lequel la suspension aqueuse du premier pigment employée dans l'étape (a) est dans un état floculé.

14. Procédé de préparation d'une composition aqueuse de couchage du papier contenant au moins 50% en poids d'un pigment mélangé comprenant un premier pigment qui libère en solution aqueuse des cations de valence supérieure à 1 et un second pigment, ce procédé comprenant les étapes qui consistent à :
    (a) former la première suspension aqueuse et la seconde suspension aqueuse respectivement du premier pigment et du second pigment pour qu'elles ne contiennent chacune pas plus de 50% en poids du premier pigment et du second pigment, respectivement;
    (b) combiner la première suspension et la seconde suspension pour former une suspension floculée;
    (c) égoutter mécaniquement la suspension floculée formée dans l'étape (b) pour former un gâteau;
    (d) mélanger le gâteau formé dans l'étape (c) avec de l'eau contenant un agent dispersant pour former une suspension contenant au moins 50%, en poids sec, des pigments mélangés; et
    (e) combiner avec la suspension formée dans l'étape (d) un adhésif pour former une composition aqueuse de couchage du papier contenant au moins 50%, en poids sec, des pigments mélangés.